# DEMANDE DE BREVET EUROPEEN

(11) **EP 0 860 932 A1**
(43) Date de publication de la demande: **26.08.1998**
(21) Numéro de dépôt: 98400404.4
(22) Date de dépôt: 19.02.1998
(51) Int. Cl.: H02K 15/02, H02K 1/18

(54) **Dispositif et procédé d'accrochage de stator de machine électrique tournante**

(30) Priorité: 20.02.1997 FR 9702009
(71) Demandeur: GEC ALSTHOM MOTEURS SA, 54062 Nancy Cédex (FR)
(72) Inventeur: Durantay, Lionel, 54420 Saulxures Les Nancy (FR); Galmiche, Christophe, 90000 Belfort (FR)
(74) Mandataire: Fournier, Michel

(57) **Abrégé**

L'invention concerne un dispositif d'accrochage pour un stator de machine électrique tournante, ladite machine comprenant un rotor (1), un stator (2) coaxial avec le rotor (1), un entrefer (10) entre le stator (2) et le rotor (1), et une carcasse (3) comprenant des points d'accrochage (4) pour le stator (2),
selon l'invention, le dispositif d'accrochage comprend des éléments d'accrochage (5) montés entre les points d'accrochage (4) et le stator (2),
chaque élément d'accrochage (5) ayant une raideur anisotropique comprenant une composante tangentielle Kt de reprise partielle des efforts statiques de la machine et une composante radiale Kr de libération partielle des efforts dynamiques du stator par rapport à la carcasse,
la résultante des composantes tangentielles Kt reprenant les efforts statiques de la machine électrique tournante avec un déplacement axial ou radial du stator inférieur ou égal à une valeur prédéterminée inférieure à l'entrefer (10),
la résultante des composantes radiales Kr libérant les efforts dynamiques du stator avec un coefficient de transmission à la carcasse prédéterminé.

## Description

L'invention concerne un procédé de réduction de bruit et de vibrations d'une machine tournante, un dispositif d'accrochage de stator de machine tournante pour mettre en oeuvre le procédé, et une machine tournante pourvue d'un tel dispositif.

L'une des raisons du bruit et des vibrations dans les machines électriques tournantes résulte de la transmission des efforts dynamiques du stator à la carcasse dans laquelle il est monté. Ces efforts dynamiques, notamment d'origine électromagnétique, ont la forme de vibrations, et prennent naissance sur le rayon d'alésage du stator. Ces vibrations sont transmises à la carcasse par les points d'accrochage du stator dans la carcasse. Les parois de la carcasse jouent alors le rôle d'amplificateur, et il en résulte un bruit acoustique et des vibrations conséquents.

Dans une forme de réalisation connue, le stator est suspendu à des poutrelles métalliques elles-mêmes associées aux flasques d'extrémités de la machine tournante. De ce fait on limite les surfaces vibrantes de la carcasse cependant. Ce dispositif est limité en puissance du fait des effets de flexion des poutrelles.

Dans une autre forme de réalisation connue, le stator est accroché à la carcasse avec des systèmes d'accrochages de type patins métalliques. Là encore, les résultats sur l'abaissement du bruit acoustique et des vibrations sont insuffisants du fait du caractère isotrope en rigidité des patins métalliques.

Les résultats insuffisants de ces techniques connues sont dus à la nécessité d'avoir des raideurs importantes entre le stator et la carcasse. En effet, il est nécessaire d'avoir une rigidité importante entre le stator et sa structure de soutien (la carcasse) pour reprendre les efforts statiques de la machine électrique tournante de façon à empêcher un excentrement statique important entre le rotor et le stator. Cet excentrement augmente les amplitudes des forces d'excitation dynamiques et statiques. Un excentrement important peut respectivement conduire à une augmentation des amplitudes des vibrations et au collage du stator avec le rotor.

Malheureusement cette raideur nécessairement importante constitue un passage de prédilection pour les vibrations génératrices de bruit du stator vers la carcasse.

L'un des buts de la présente invention est de proposer un dispositif d'accrochage du stator à la carcasse permettant d'obtenir une machine tournante sensiblement moins vibrante et plus silencieuse que dans l'art antérieur.

A cet effet, la demanderesse a fondé sa réflexion sur l'étude des efforts statiques et dynamiques du stator et sur la rhéologie du matériau utilisé pour accrocher le stator à la carcasse.

L'invention concerne donc un procédé pour réduire les vibrations et le bruit d'une machine électrique tournante comprenant un rotor, un stator coaxial avec le rotor, et une carcasse, le stator étant accroché à la carcasse en un nombre de points d'accrochage discret.

Selon ce procédé :
- on calcule les efforts statiques de la machine électrique tournante;
- on calcule la rigidité statique de la carcasse, du rotor et du stator;
- on calcule, pour chacun des points d'accrochage du stator à la carcasse, à partir de la position d'équilibre entre la carcasse, le stator et le rotor, une contribution de raideur tangentielle au point d'accrochage pour que la résultante des contributions de raideur tangentielle reprenne les efforts statiques de la machine électrique tournante avec un déplacement axial ou radial du stator inférieur ou égal à une valeur prédéterminée;
- on calcule les efforts dynamiques du stator;
- on calcule la rigidité dynamique de la carcasse; et du stator
- on calcule pour chaque point d'accrochage, une contribution de raideur radiale telle que la résultante des contributions de raideur radiale libère les efforts dynamiques du stator avec un coefficient de transmission à la carcasse prédéterminé;
- pour chaque point d'accrochage, on réalise un élément d'accrochage du stator à la carcasse, présentant une raideur anisotropique ayant une composante tangentielle Kt égale à la contribution de raideur tangentielle calculée pour le point d'accrochage considéré, et une composante radiale Kr égale à la contribution de raideur radiale calculée pour le point d'accrochage considéré, et
- on monte le stator dans la carcasse, suspendu aux points d'accrochage de la carcasse, par les éléments d'accrochage.

L'invention concerne aussi un dispositif d'accrochage pour un stator de machine électrique tournante, ladite machine comprenant un rotor, un stator coaxial avec le rotor, un entrefer entre le stator et le rotor, et une carcasse comprenant des points d'accrochage pour le stator.

Selon l'invention, le dispositif d'accrochage comprend des éléments d'accrochage montés entre les points d'accrochage et le stator.

Chaque élément d'accrochage a une raideur anisotropique comprenant une composante tangentielle Kt de reprise partielle des efforts statique de la machine et une composante radiale Kr de libération partielle des efforts dynamiques du stator par rapport à la carcasse.

La combinaison des composantes tangentielles Kt reprend les efforts statiques de la machine électrique tournante avec un déplacement axial ou radial du stator inférieur ou égal à une valeur prédéterminée inférieure à l'entrefer.

La combinaison des composantes radiales Kr libère les efforts dynamiques du stator avec un coefficient de transmission à la carcasse prédéterminé.

L'invention concerne enfin une machine électrique tournante à stator suspendu comprenant un dispositif d'accrochage tel que décrit ci-dessus.

Le caractère anisotropique des éléments d'accrochage permet d'obtenir un soutien correct du stator (fortes raideurs tangentielles contre les efforts statiques) et un absorbeur radial efficace des vibrations émises par les efforts dynamiques du stator (faibles raideurs radiales).

D'autres avantages et caractéristiques de la présente invention résulteront de la description qui va suivre en référence aux dessins dans lesquels :

La figure 1 est une représentation schématique en une coupe transversale d'une machine selon l'invention.

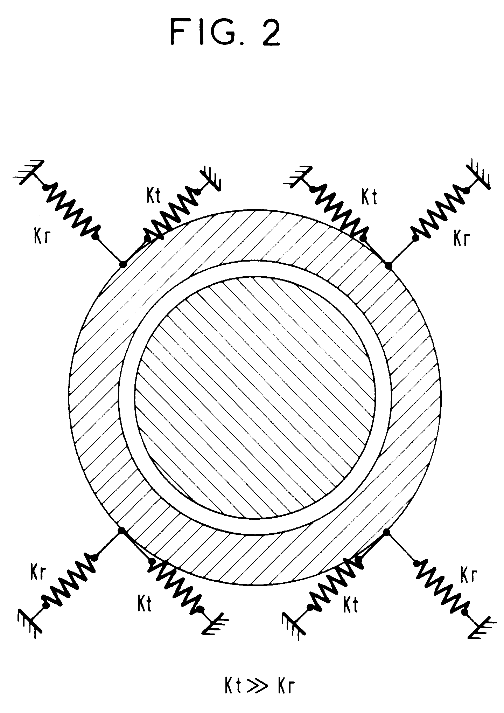

La figure 2 est une représentation de la figure 1 où les éléments d'accrochages ont été remplacés par leur ressort équivalent.

Les efforts statiques du stator sont principalement, le poids propre du stator, l'attraction magnétique statique entre le stator et le rotor, le couple électromagnétique de réaction (contre-réaction du stator lorsque le rotor tourne), les forces d'inerties induites sur le stator par un déplacement de la machine tournante (machine tournante embarquée, moteur de propulsion, tremblement de terre etc...).

Ces efforts statiques vont générer l'excentrement du stator par rapport au rotor. Il faut donc, dans la direction de la résultante de ces efforts, que la raideur du dispositif l'accrochage soit importante afin de limiter l'excentrement. Cela peut être réalisé avec une combinaison de raideurs tangentielles fortes aux points d'accrochage du stator.

En outre les efforts dynamiques du stator, qui sont principalement à l'origine des vibrations de carcasse et du bruit, engendre des déformations de type respiration radiale, ou de lobes radiaux. Il faut donc, dans les directions radiales, que la raideur du dispositif d'accrochage soit telle qu'elle permette une absorption importante des vibrations.

C'est par des raideurs radiales faibles aux points d'accrochage que cela peut être réalisé.

La présente invention concerne d'abord un procédé pour réduire les vibrations et le bruit d'une machine électrique tournante comprenant un rotor 1, un stator 2 coaxial avec le rotor 1, et une carcasse 3, le stator 2 étant accroché à la carcasse 3 en un nombre de points d'accrochage 4 discret.

Selon ce procédé :
- On calcule les efforts statiques de la machine électrique tournante. Ces efforts comprennent principalement le poids propre du stator 2, l'attraction magnétique statique entre le stator 2 et le rotor 1, le couple électromagnétique de réaction (contre-réaction du stator 2 lorsque le rotor 1 tourne), les forces d'inerties induites sur le stator 2 par un déplacement de la machine tournante (machine tournante embarquée, moteur de propulsion etc...).

On pourra faire ces calculs pour diverses configurations de la machine électrique tournante, par exemple :
* avec chargement nominal
* avec chargement sous couple de démarrage
* avec chargement sous couple de court circuit
* avec chargement sous l'effet de force d'inertie (tremblement de terre).

- On calcule, pour chacun des points d'accrochage du stator 2 à la carcasse 3, une contribution de raideur tangentielle Kt au point d'accrochage 4 pour que la résultante des contributions de raideur tangentielle reprenne les efforts statiques de la machine électrique tournante avec un déplacement axial ou radial du stator inférieur ou égal à une valeur prédéterminée. Les déplacements axiaux ou radiaux sont prédéterminés en fonction de la configuration. Par exemple 10% de l'entrefer 10 pour le nominal, 15% de l'entrefer 10 pour le couple de démarrage etc...
- On calcule les efforts dynamiques du stator 2. C'est les efforts créés dans le stator 2 en fonctionnement de la machine.
- On calcule la rigidité dynamique de la carcasse et du stator 3.
- On calcule pour chaque point d'accrochage 4, une contribution de raideur radiale Kr telle que la résultante des contributions de raideur radiale libère les efforts dynamiques du stator 2 avec un coefficient de transmission à la carcasse 3 prédéterminé.
- Pour chaque point d'accrochage 4, on réalise un élément d'accrochage 5 du stator 2 à la carcasse 3, présentant une raideur anisotropique.

Cette raideur anisotropique comprend d'une part, une composante tangentielle Kt égale à la contribution de raideur tangentielle calculée pour le point d'accrochage 5 considéré et pour une sécurité donnée quelle que soit la configuration, et d'autre part, une composante radiale Kr égale à la contribution de raideur radiale calculée pour le point d'accrochage 5 considéré.
- Dans une dernière étape, on monte le stator 2 dans la carcasse 3, suspendu aux points d'accrochage 4 de la carcasse 3, par les éléments d'accrochage 5 réalisés.

L'invention concerne aussi un dispositif d'accrochage pour un stator 2 de machine électrique tournante, ladite machine comprenant un rotor 1, un stator 2 coaxial avec le rotor 1, un entrefer 10 entre le stator 2 et le rotor 1, et une carcasse 3 comprenant des points d'accrochage 5 pour le stator 2,
le dispositif d'accrochage comprend des éléments d'accrochage 5 montés entre les points d'accrochage 5 et le stator 2.

Chaque élément d'accrochage 5 a une raideur anisotropique comprenant une composante tangentielle Kt de reprise partielle des efforts statique de la machine et une composante radiale Kr de libération partielle des efforts dynamiques du stator par rapport à la carcasse.

La résultante des composantes tangentielles Kt reprend les efforts statiques de la machine électrique tournante avec un déplacement axial ou radial du stator inférieur ou égal à une valeur prédéterminée inférieure à l'entrefer, et
la résultante des composantes radiales Kr libère les efforts dynamiques du stator avec un coefficient de transmission à la carcasse prédéterminé.

Dans une forme de réalisation, les éléments d'accrochage 5 sont réalisés à partir d'un composite lamifié élastomère comprenant un empilement alternatif de plaques d'acier 8 et de couches d'élastomère 9. Par construction, ce composite lamifié a une raideur dans la direction d'empilement (traction/compression), très supérieure à la raideur dans la direction perpendiculaire (cisaillement).

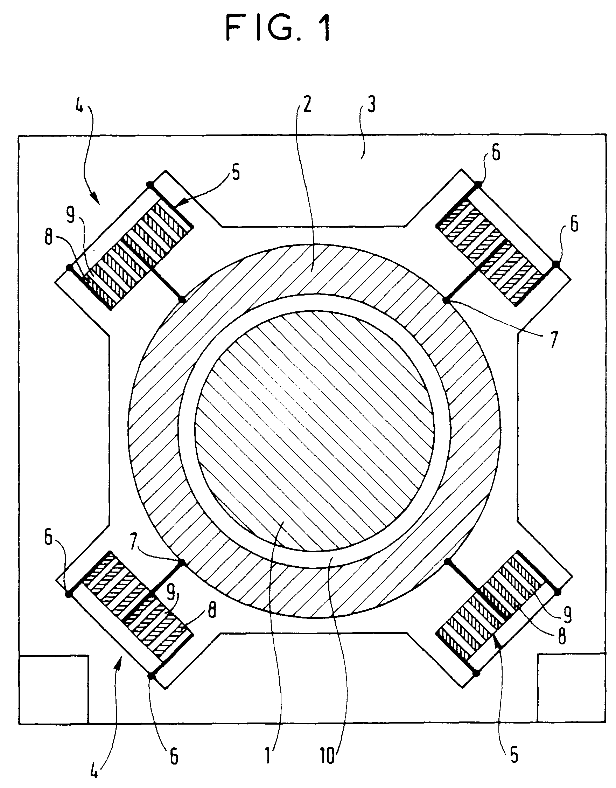

Dans la forme de réalisation représentée sur la figure 1, le dispositif comporte huit éléments d'accrochage repartis par quatre dans deux plans transversaux (un seul est représenté), equirépartis à 45, 135, 225, et 315°.

Chaque élément d'accrochage 5 comprend deux points extrêmes 6 de montage sur la carcasse 3 et un point milieu 7 de montage sur le stator 2. La direction d'empilement est parallèle à la tangente au stator 2 au point milieu 7 de montage. De cette façon, chaque élément d'accrochage 5 a bien une raideur Kr faible radialement (cisaillement) et une raideur Kt forte tangentiellement (traction/compression).

Le dispositif peut, bien entendu, être optimisé de manière à réduire le nombre d'éléments d'accrochage. Au minimum seulement trois éléments d'accrochage pour l'ensemble du stator sont nécessaires.

L'invention concerne aussi une machine électrique tournante pourvue d'un dispositif d'accrochage selon l'invention.

Bien entendu, l'invention n'est pas limitée au mode de mise en oeuvre ou de réalisation décrit, mais elle est susceptible de nombreuses variantes accessibles à l'homme du métier sans que l'on s'écarte de l'invention. En particulier, les formes, le nombre et la disposition des éléments d'accrochage peuvent varier sans sortir du cadre de la présente invention. De même, les configurations de calcul des efforts statiques ou dynamiques de la machine tournante peuvent changer sans sortir du cadre de la présente invention.

## Revendications

1. Procédé pour réduire le bruit et les vibrations d'une machine électrique tournante comprenant un rotor (1), un stator (2) coaxial avec le rotor (1), et une carcasse (3), le stator (2) étant accroché à la carcasse (3) en un nombre de points d'accrochage (4) discret, caractérisé en ce que :
- on calcule les efforts statiques de la machine électrique tournante;
- on calcule la rigidité statique de la carcasse, du stator et du rotor;
- on calcule, pour chacun des points d'accrochage du stator à la carcasse, à partir de l'état d'équilibre du stator, du rotor et de la carcasse, une contribution de raideur tangentielle au point d'accrochage pour que la résultante des contributions de raideur tangentielle reprenne les efforts statiques de la machine électrique tournante avec un déplacement axial ou radial du stator inférieur ou égal à une valeur prédéterminée;
- on calcule les efforts dynamiques du stator;
- on calcule la rigidité dynamique de la carcasse et du stator;
- on calcule pour chaque point d'accrochage, une contribution de raideur radiale telle que la résultante des contributions de raideur radiale libère les efforts dynamiques du stator avec un coefficient de transmission à la carcasse prédéterminé;
- pour chaque point d'accrochage, on réalise un élément d'accrochage du stator à la carcasse, présentant une raideur anisotropique ayant une composante tangentielle Kt égale à la contribution de raideur tangentielle calculée pour le point d'accrochage considéré, et une composante radiale Kr égale à la contribution de raideur radiale calculée pour le point d'accrochage considéré, et
- on monte le stator dans la carcasse, suspendu aux points d'accrochage de la carcasse, par les éléments d'accrochage.

2. Dispositif d'accrochage pour un stator de machine électrique tournante, ladite machine comprenant un rotor (1), un stator (2) coaxial avec le rotor (1), un entrefer (10) entre le stator (2) et le rotor (1), et une carcasse (3) comprenant des points d'accrochage (4) pour le stator (2),
le dispositif d'accrochage est caractérisé en ce qu'il comprend des éléments d'accrochage (5) montés entre les points d'accrochage (4) et le stator (2),
chaque élément d'accrochage (5) ayant une raideur anisotropique comprenant une composante tangentielle Kt de reprise partielle des efforts statique de la machine et une composante radiale Kr de libération partielle des efforts dynamiques du stator par rapport à la carcasse,
la résultante des composantes tangentielles Kt reprenant les efforts statiques de la machine électrique tournante avec un déplacement axial ou radial du stator inférieur ou égal à une valeur prédéterminée inférieure à l'entrefer (10),
la résultante des composantes radiales Kr libérant les efforts dynamiques du stator avec un coefficient de transmission à la carcasse prédéterminé.

3. Dispositif selon la revendication 2 caractérisé en ce que les éléments d'accrochage (5) sont en matériau composite empilé élastomère (9)/acier (8), disposés entre le stator (2) et la carcasse (1), la direction d'empilage étant parallèle à la tangente au stator (2) au point d'attache (7) du stator, chaque élément (5) ayant deux points extrêmes (6) d'attache à la carcasse (3) et un point milieu (7) d'attache au stator (2).

4. Machine électrique tournante comprenant un rotor (1), un stator (2) coaxial avec le rotor (1), un entrefer (10) entre le stator (2) et le rotor (1), et une carcasse (3) comprenant des points d'accrochage (4) pour le stator (2), caractérisée en ce qu'elle comprend un dispositif d'accrochage selon l'une quelconque des revendications 2 ou 3.
